# EUROPÄISCHE PATENTANMELDUNG

(11) **EP 1 924 072 A1**
(43) Veröffentlichungstag der Anmeldung: **21.05.2008**
(21) Anmeldenummer: 06023662.7
(22) Anmeldetag: 14.11.2006
(51) Int. Cl.: H04M 7/00, H04L 29/06

(54) **Aufbau einer Kommunikationsverbindung in einem privaten IP-Netzwerk ohne Kontaktierung eines öffentlichen STUN-Servers**

(71) Anmelder: SIEMENS AKTIENGESELLSCHAFT, 80333 München (DE)
(72) Erfinder: Geck, Bertram, 81371 München (DE)

(57) **Zusammenfassung**

Bei der vorliegenden Erfindung handelt es sich um ein Verfahren zum Aufbau einer paketorientierten Kommunikationsverbindung. Dabei geht es insbesondere um den Aufbau einer Kommunikationsverbindung von einem ersten Endgerät (E1) eines lokalen Datennetzwerks (LAN) zu einem zweiten Endgerät (E2). Dem ersten Endgerät liegen keine Informationen darüber vor, ob das zweite Endgerät (E2) bzw. die IP-Adresse (IP 107.246.115.4) des zweiten Endgeräts zu demselben lokalen Adresseraum, also zu demselben lokalen Datennetzwerk gehört wie das erste Endgerät (E1). Dies ist insbesondere bei größeren privaten Datennetzen der Fall, die zwar einen einheitlichen "privaten" Adressraum aufweisen, jedoch aus einer Vielzahl von Domänen und Sub-Netzen bestehen können, so dass anhand der IP-Adresse des zweiten Endgeräts nicht unterschieden werden kann, ob dieses gerufene Endgerät Bestandteil des eigenen privaten Datennetzes, also des eigenen Adresseraumes, ist, order nicht. Aus diesem Grund, wird im Stand der Technik für alle Kommunikationsverbindungen ein STUN-Server (STUN) kontaktiert. Somit werden viele Kommunikationsverbindungen über das Internet (WWW) geroutet, obwohl es sich de facto, um eine Kommunikationsverbindung handelt, die im eigenen, privaten Netz (LAN) vollständig abgewickelt werden könnte.
Die dem erfinderischen Verfahren zu Grunde liegende Idee besteht daher darin, durch ein Test-Datenpaket herauszufinden, ob das erste und das zweite Endgerät in demselben lokalen Adressraum angeordnet sind. Dabei können Netzwerk-Diagnosemittel, die dem Stand der Technik entsprechen, zum Einsatz kommen. Sind erstes und zweites Endgerät im lokalen Adressraum angeordnet, so wird kein STUN-Server kontaktiert, sondern stattdessen die lokale Adresse für den Aufgabau der Kommunikationsverbindung verwendet.

## Beschreibung

Die Erfindung betrifft ein Verfahren zum Aufbau einer paketorientierten Kommunikationsverbindung gemäß dem Oberbegriff des Patentanspruchs 1 und ein Endgerät zum Aufbau einer paketorientierten Kommunikationsverbindung in einem Datennetzwerk gemäß Patentanspruch 7.

Datennetze werden nicht nur für die Übertragung elektronischer Nachrichten (z.B. E-Mails), der Übertragung von Internet-Seiten und anderen sog. "Offline"-Inhalten verwendet, sondern auch für Echtzeit-Kommunikationsverbindungen. Die letztgenannten Kommunikationsverbindungen bestehen zumeist aus Datenströmen ("Media-Streams"), die aus einer Reihe von Datenpaketen bestehen, die zumeist mittels des Internet-Protokolls zwischen Endgeräten, Servern oder anderen Netzelementen übertragen werden. Ein bekanntes Beispiel für solche datenstrom-orientierten Kommunikationsverbindungen sind Internet-Telefonate, die sog. VoIP-Verbindungen (VoIP = Voice Over Internet Protocol). Dabei werden die Nutzinhalte (beispielsweise digitalisierte Audio-Signale, Bewegtbilder etc.) in Datenpakete (IP-Datagramme) eingefügt, mit einer Kommunikationsadresse (IP-Adresse) des Empfänger-Gerätes versehen und dann mittels eines lokalen Datennetzes (LAN = Local Area Network) oder mit einem öffentlichen Datennetz (meist das Internet) übertragen.

Für den Aufbau und Ablauf einer solchen paketorientierten Kommunikationsverbindung werden in der Regel gebräuchliche Kommunikationsprotokolle wie ITU-T-H.323 oder SIP (Session Initiation Protocol) verwendet. Dabei werden zwischen einem die Kommunikationsverbindung etablierenden Endgerät und der gerufenen Gegenstelle (entweder ein weiteres Endgerät oder eine Netzkomponente, wie z.B. Gateway, Gatekeeper, Server etc.) protokollgemäß Signalisierungsmeldungen ausgetauscht, die den nachfolgenden Austausch der eigentlichen Nutzdatenverbindung (Nutzdatenströme) vorbereiten. Eine solche Signalisierungsmeldung wird beispielsweise im Umfeld des SIP-Protokolls als "Invite"-Meldung, also als "Einladungs-Meldung" bezeichnet. Eine solche Meldung umfasst neben der Kommunikationsadresse (hier: IP-Adresse) des gerufenen Endgerätes auch eine "Absender-Adresse", also die IP-Adresse des rufenden Endgerätes. Die "Absender-Adresse" wird sowohl zur Adressierung der Signalisierungsmeldungen in umgekehrter Richtung, also von dem gerufenen Endgerät zu dem rufenden Endgerät, als auch für die Adressierung aller Nutzdaten-Pakete verwendet, die von dem gerufenen Endgerät zu dem rufenden Endgerät übertragen werden sollen.

In den Fällen, in denen sowohl das gerufene Endgerät als auch das gerufene Endgerät entweder beide in demselben lokalen Datennetzwerk oder beide in demselben globalen Datennetzwerk (beispielsweise das Internet) angeordnet sind, gehören beide Endgeräte demselben Adressraum an. In diesen Fällen kann sowohl für das gerufene Endgerät als auch für das rufende Endgerät für die Zwecke des Aufbaus der Kommunikationsverbindung jeweils diejenige IP-Adresse verwendet werden, die diesem Endgerät jeweils fest zugeordnet ist. Endgeräte, die in lokalen Datennetzwerken (z.B. Firmen-Intranets, Heim-Netzwerken etc.) angeordnet sind, sind meist nicht mit einer global gültigen Internet-Adresse (IP-Adresse) ausgestattet. Ein Grund dafür ist derjenige, dass der Adressraum der derzeit gebräuchlichen Version des Internet-Protokolls ("IPv4") nur aus vier Byte besteht, was zur Folge hat, dass der damit gebildete Adressraum (Adressen-Vorrat) nicht ausreicht, um alle Computer und Netzelemente weltweit mit einer eigenen, eindeutigen IP-Adresse auszustatten. Aus diesem Grund werden Geräte privater Kommunikationsnetze oder Datennetze mit IP-Adressen adressiert, welche nur lokal eindeutig sind. Solche privaten Netze sind mit speziellen Netzelementen (Routern, Gateways) mit dem öffentlichen, globalen Internet verbunden. Diese Netzelemente (Gateway, Router) wiederum sind mit einer oder mehreren global gültigen und eindeutigen IP-Adressen ausgestattet, mit deren Hilfe sie aus dem Internet heraus adressiert werden können. Datenpakete, die von einem lokalen Datennetz mit lokalen Adressen über ein solches Netzelement zu einem Gerät im Internet übertragen werden, werden in diesem Netzelement bezüglich der Absender-Adresse umgesetzt. Ein solches Verfahren ist das bekannte NAT-Verfahren (NAT = Network Address Translation), welches in den betroffenen Datenpaketen die lokal gültige Absender-Adresse durch eine global gültige Internet-Adresse ersetzt und die in Gegenrichtung aus dem Internet eintreffenden Datenpakete mit der lokalen IP-Adresse des betroffenen Computers oder Endgerätes adressiert und somit an den richtigen lokalen Endpunkt weiterleitet.

Das beschriebene NAT-Verfahren funktioniert einfach und sicher für solche Datenpakte, in denen die Absender-Adresse nur im sog. "Header" der IP-Datenpakete eingetragen ist und damit auch nur im Header von der NAT-Instanz ausgetauscht werden muss. Bei vielen Kommunikationsprotokollen wie dem bereits erwähnten SIP-Protokoll sind die Absender-Adressen aber auch in den sog. "höheren Protokollschichten" codiert, was bedeutet, dass auch im Nutzinhalt der Datenpakete, also außerhalb des "Headers", Adressangaben enthalten sind, die ebenfalls durch den NAT-Process bearbeitet werden müssen. Das bedeutet jedoch, dass die jeweils verwendete NAT-Instanz den Aufbau des Nutzinhalts der Datenpakete verschiedenster Kommunikationsprotokolle "kennen" muss, was dazu führt, dass die NAT-Instanz sehr aufwendig gestaltet sein muss. Ein solches Verfahren ist somit aufwendig und damit auch wartungsintensiv und nicht in jedem Fall betriebssicher.

Eine Lösung dieses Problems besteht in dem Einsatz sog. STUN-Server (STUN = Simple Traversal of UDP Messages over NAT). STUN-Server sind üblicherweise außerhalb der lokalen Datennetze angeordnet, also beispielsweise direkt an das Internet angeschlossen und werden häufig von Internet-Providern bereitgestellt. Ein rufendes Endgerät, welches sich beispielsweise in einem lokalen Datennetzwerk befindet, kann durch eine Abfragenachricht an den STUN-Server die diesem Endgerät zugeordnete globale Internet-Adresse (IP-Adresse) in Erfahrung bringen. Bei der Verwendung einer NAT-Instanz ist die so ermittelte Adresse oft diejenige IP-Adresse, die durch die NAT-Instanz in das Datenpaket der Abfragemeldung anstelle der lokalen IP-Adresse des rufenden Endgerätes eingesetzt würde. Die so in Erfahrung gebrachte IP-Adresse kann von dem rufenden Endgerät dann in den bereits erwähnten "höheren Protokollschichten" des verwendeten Kommunikationsprotokolls als "Absenderadresse" verwendet werden, so dass eine Kommunikation mit einem gerufenen Endgerät auch dann problemlos möglich ist, wenn dieses gerufene Endgerät außerhalb des eigenen lokalen Netzes angeordnet ist.

Ein Problem bei dem geschilderten Verfahren besteht darin, dass insbesondere größere private Datennetze zwar einen einheitlichen "privaten" Adressraum aufweisen, jedoch aus einer Vielzahl von Domänen und Sub-Netzen bestehen können, so dass ein rufendes Endgerät bei der Kontaktierung eines gerufenen Endgerätes anhand der IP-Adresse des gerufenen Endgerätes nicht unterscheiden kann, ob dieses gerufene Endgerät Bestandteil des eigenen privaten Datennetzes, also des eigenen Adressraums, ist, oder nicht. Aus diesem Grund wird häufig für alle Kommunikationsverbindungen das geschilderte Verfahren, welches die Kontaktierung des STUN-Servers beinhaltet, vorgenommen, obwohl das in vielen Fällen überhaupt nicht nötig ist. Somit werden viele Kommunikationsverbindungen unnötig über das Internet geroutet, obwohl es sich de facto um eine Kommunikationsverbindung handelt, die im eigenen, privaten Netz vollständig abgewickelt werden könnte. Neben einer unnötigen Belegung von Ressourcen bedeutet dies auch ein erhöhtes Sicherheitsrisiko, weil davon auszugehen ist, dass die über das Internet gerouteten Datenpakete leichter "abgehört" oder manipuliert werden können, als "intern" in einem privaten Datennetz transportierte Datenpakete.

Es ist also eine Aufgabe der vorliegenden Erfindung, Kommunikationsverbindungen lokaler Endgeräte zu anderen Endgeräten zu optimieren.

Die Lösung dieser Aufgabe ist in den unabhängigen Patentansprüchen angegeben.

Die Lösung sieht dabei ein Verfahren zum Aufbau einer paketorientierten Kommunikationsverbindung von einem ersten zu einem zweiten Endgerät in einem Datennetzwerk vor, wobei das Datennetzwerk aus einem lokalen Datennetzwerk mit lokalen Adressen eines lokalen Adressraums und einem damit verbundenen öffentlichen Datennetz mit globalen Adressen besteht, wobei das erste Endgerät im lokalen Datennetzwerk angeordnet ist, und wobei dem ersten Endgerät eine lokale Adresse für Kommunikationsverbindungen innerhalb des lokalen Datennetzwerks und eine globale Adresse für Kommunikationsverbindungen mit Endgeräten des öffentlichen Datennetzwerks zugeordnet sind. Dabei wird in einem ersten Schritt durch das erste Endgerät ein Test-Datenpaket zu dem zweiten Endgerät versendet, wobei die Route des Test-Datenpaketes im Datennetzwerk erfasst wird, in einem zweiten Schritt wird anhand der erfassten Route überprüft, ob das erste und das zweite Endgerät in demselben lokalen Adressraum angeordnet sind, und in einem dritten Schritt wird in den Fällen, in denen das Ergebnis der Überprüfung positiv ist, für den Aufbau der Kommunikationsverbindung die lokale Adresse des ersten Endgerätes als Absenderadresse verwendet, und in den anderen Fällen die globale Adresse. Dadurch werden Kommunikationsverbindungen zwischen Endgeräten eines lokalen Adressraums nicht unnötig über ein öffentliches Netzwerk geroutet, wodurch Ressourcen eingespart, Kosten gesenkt und die Datensicherheit erhöht wird. Dabei brauchen Netzelemente wie Router und NAT-Instanzen nicht umprogrammiert werden, so dass das Verfahren in gebräuchlichen Infrastrukturen einsetzbar ist.

Die Lösung sieht außerdem ein Endgerät zum Aufbau einer paketorientierten Kommunikationsverbindung in einem Datennetzwerk vor, mit einer Einrichtung zum Versenden eines Test-Datenpaketes zu einem zweiten Endgerät, mit einem Mittel zur Erfassung der von dem Test-Datenpaket durchlaufenden Route in dem Datennetzwerk, mit einem Mittel zur Auswertung der erfassten Route, wobei durch diese Mittel feststellbar ist, ob das zweite Endgerät in demselben Adressraum wie das erste Endgerät angeordnet ist, mit einem Mittel zur Erfassung einer dem ersten Endgerät zugeordneten globalen Adresse, und mit einer Einrichtung zum Aufbau der Kommunikationsverbindung zu dem zweiten Endgerät, wobei diese Einrichtung derart ausgestaltet ist, dass in den Fällen, in denen das zweite Endgerät in demselben Adressraum angeordnet ist wie das erste Endgerät, eine lokale Adresse des ersten Endgerätes als Absenderadresse verwendet wird, und in den anderen Fällen eine erfasste globale Adresse des ersten Endgerätes. Durch den Einsatz eines solchen Endgerätes werden die Nachteile beim Einsatz von STUN-Servern und anderer Verfahren, die das grundsätzliche verwenden globaler Adressen für Kommunikationsverbindungen vorsehen, vermieden, indem eine fallweise Entscheidung die Verwendung globaler oder lokaler Adressen vorgesehen werden kann. Dabei ist das Endgerät und damit auch das Verfahren auch in Netzwerken einsetzbar, in denen die beteiligten Endgeräte nicht in demselben Subnetzwerk oder derselben Domäne angeordnet sind.

Vorteilhafte Ausgestaltungen des Verfahrens sind in den abhängigen Patentansprüchen angegeben. Die für das Verfahren beschriebenen Merkmale und Vorteile sind sinngemäß auch auf das erfindungsgemäße Endgerät anzuwenden, und umgekehrt.

Verbindungen zu Endgeräten außerhalb des lokalen Adressraums des ersten Endgerätes können einfach und mit gebräuchlicher Netztechnik, z.B. einfachen NAT-Instanzen, etabliert werden, wenn in dem oder vor dem dritten Schritt zumindest in den Fällen, in denen das Ergebnis der Überprüfung negativ ist, die dem ersten Endgerät zugeordnete globale Adresse durch Zugriff auf einen STUN-Server ermittelt wird.

In vielen Fällen reicht es aus, wenn für die Überprüfung die Anzahl der Hops bei der Übertragung des Test-Datenpaketes zu dem zweiten Endgerät erfasst und ausgewertet wird. Für die Überprüfung wird dann vorteilhaft die Anzahl der Hops eines weiteren Test-Datenpaketes zu dem STUN-Server ermittelt und mit der Anzahl der Hops des Test-Datenpaketes zu dem zweiten Endgerät verglichen. Bei einer identischen Anzahl der Hops kann darauf geschlossen werden, dass sich das gerufene Endgerät und der STUN-Server in demselben Adressraum, also dem öffentlichen Netzwerk, befinden. In diesen Fällen kann oft auf weitere Analysen des erstgenannten Test-Datenpaketes verzichtet werden.

Ein optimiertes Routing kann durchgeführt werden, wenn durch die Überprüfung festgestellt wird, ob sich das zweite Endgerät und der STUN-Server in einem Datennetz mit demselben Adressraum befinden und im positiven Fall im dritten Schritt die globale Adresse verwendet wird. Ein häufiger Anwendungsfall wird dabei abgedeckt, wenn als das öffentliche Datennetzwerk das Internet verwendet wird.

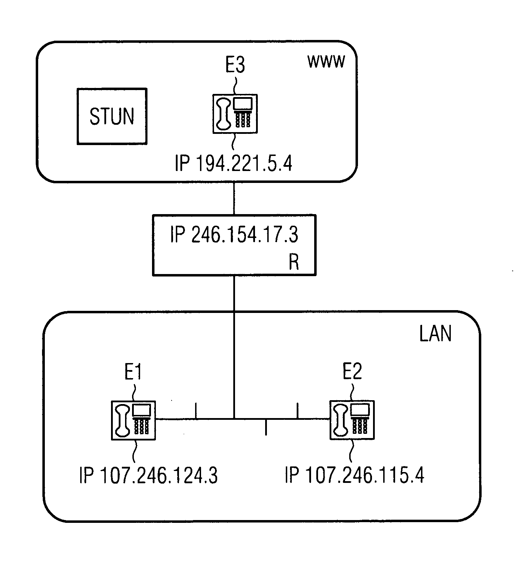

Ausführungsbeispiele des erfindungsgemäßen Verfahrens werden nachfolgend anhand der Zeichnung erläutert. Sie dienen gleichzeitig der Erläuterung von Ausführungsbeispielen für erfindungsgemäße Endgeräte.

Dabei zeigt die einzige Figur in schematischer Darstellung Endgeräte in einem lokalen und in einem öffentlichen Datennetz.

In der Figur sind Endgeräte E1, E2, E3 in dem lokalen Datennetz LAN und dem öffentlichen Datennetz WWW dargestellt. Das lokale Datennetz LAN ist in diesen Ausführungsbeispielen ein weit verzweigtes Datennetz eines Unternehmens. Das öffentliche Datennetz WWW ist in diesem Ausführungsbeispiel das Internet; selbstverständlich können auch andere Datennetze LAN, WWW verwendet werden. Das lokale Datennetz LAN ist über einen Router R mit dem öffentlichen Datennetz WWW verknüpft.

Zu den Endgeräten E1, E2, E3 sind die jeweils zugeordneten Kommunikationsadressen (hier: IP-Adressen) dargestellt. Die bei dem Router dargestellte IP-Adresse ist diejenige Internet-Adresse, die dem Internet-seitigen Interface (nicht dargestellt) des Routers R zugeordnet ist; der Router R ist also über die IP-Adresse 246.154.17.3 aus dem öffentlichen Datennetz WWW heraus adressierbar. Aus dem lokalen Datennetz LAN heraus ist der Router R ebenfalls adressierbar; die zugehörige IP-Adresse ist nicht dargestellt. Der Router R ist mit einer NAT-Instanz ("NAT-Sever") ausgestattet, der der Adressumsetzung ("Network Address Translation") bzw. der Port-Umsetzung (PAT = Port Address Translation) dient. Datenpakete, die von den Endgeräten E1, E2 in das öffentliche Datennetz WWW geroutet werden, werden von dem Router R bzw. der NAT-Instanz mit der "Absenderadresse" 246.154.17.3, also der IP-Adresse der NAT-Instanz und des Routers R, in ihrem IP-Header versehen.

Das lokale Datennetz LAN, welches hier aus Gründen der Übersichtlichkeit nur mit den für diese Beschreibung relevanten Netzelementen, nämlich den Endgeräten E1, E2 und dem Router R, dargestellt ist, ist in verschiedene Domänen und Teil-Datennetze unterteilt, so dass die Endgeräte E1 und E2 zwar demselben Adressraum angehören, aber in den Endgeräten E1 und E2 keine Informationen darüber vorliegen, welche der Endgeräte E1, E2, E3 in dem lokalen Datennetz LAN angeordnet sind, und welche einem anderen Datennetz, beispielsweise dem öffentlichen Datennetz WWW, angehören.

Neben dem Endgerät E3 ist in dem öffentlichen Datennetz auch ein Adressierungs-Server STUN (Simple Traversal of UDP messages over NAT), auch STUN-Server genannt, angeordnet.

Der STUN-Server weist unter anderem eine Funktion auf, die Kommunikationsverbindungen, meist Internet-Telefonate gemäß dem SIP-Standard, zwischen Endgeräten E1, E2 in einem lokalen Datennetz und Endgeräten E3 in einem öffentlichen Datennetz gestattet. Dabei fungiert der STUN-Server als "Vermittlungs-Station" für die Nutzdatenströme, wobei die Datenpakete der Nutzdatenströme durch den STUN-Server jeweils von einem sendenden Endgerät empfangen und an das empfangende Endgerät weitergeleitet werden. Diese Funktion soll jedoch für die Kommunikationsverbindungen in diesem Ausführungsbeispiel nicht verwendet werden, weil aus Gründen der Datensicherheit und der Ressourcen-Optimierung und nicht zuletzt auch zur Minimierung der Laufzeiten der Datenpakete die Nutzdatenströme und auch die Signalisierungsmeldungen direkt zwischen den Endgeräten E1, E2 und E3 ausgetauscht werden sollen. Das in der RFC3489 (RFC = Request for Comment) beschriebene Verfahren soll also nicht verwendet werden.

Eine weitere, hier genutzte Funktion der STUN-Server besteht darin, dass Endgeräte E1, E2, E3 mittels einer Abfragenachricht an den STUN-Server ermitteln können, unter welcher global gültigen IP-Adresse dieses jeweilige Endgerät E1, E2, E3 erreicht werden kann. Eine entsprechende Abfragenachricht des Endgerätes E1 würde der Adressierungs-Server STUN (STUN-Server) im vorliegenden Ausführungsbeispiel mit einer Antwortnachricht beantworten, welche die IP-Adresse 246.154.17.3 zusammen mit einer zugeordneten IP-Port-Nummer umfasst. Dies ist nämlich die Adresse, die den von dem Router R bzw. der in dem Router R installierten NRT-Instanz denjenigen Datenpaketen als "Absenderadresse" zugeordnet wird, die aus dem lokalen Datennetz LAN heraus zu Komponenten und Instanzen des globalen Datennetzes WWW übertragen werden. Eine gleichlautende Abfragenachricht des Endgerätes E3 würde der Adressierungs-Server STUN mit der IP-Adresse 194.221.5.4 beantworten, weil Datenpakete des Endgerätes E3 nicht durch eine NAT-Instanz "umadressiert" werden, so dass die dem Netzwerk-Interface des Endgerätes E3 zugeordnete IP-Adresse 194.221.5.4 per se eine gültige Internet-Adresse dargestellt.

Im Folgenden wird anhand der Figur ein erstes Fallbeispiel erläutert, bei dem von dem Endgerät E1 zu dem Endgerät E2 eine Echtzeit-Kommunikationsverbindung aufgebaut werden soll. Dabei wird vorausgesetzt, dass in dem Endgerät E1 eine Information über die Kommunikationsadresse des Endgerätes E2, also in diesem Fall die IP-Adresse 107.246.115.4, vorliegt. Bei Nicht-Vorliegen der IP-Adresse des gewünschten Kommunikationspartners kann eine solche Adresse durch Zugriff auf einen SIP-Proxy-Server, einen Directory-Server, einen DNS-Server o.ä. in Erfahrung gebracht werden; ein solches Vorgehen entspricht dem Stand der Technik. Da in dem Endgerät E1 keine Informationen darüber vorliegen, ob das Endgerät E2 bzw. die IP-Adresse des Endgerätes E2 zu demselben Adressraum, also zu demselben lokalen Datennetz LAN, gehört wie das Endgerät E1, versendet nun das Endgerät E1 eine Testnachricht bzw. ein Test-Datenpaket zu der IP-Adresse des Endgerätes E2. Der Verlauf dieses Test-Datenpaketes bzw. der Test-Nachricht wird dabei aufgezeichnet; man spricht dabei auch vom "Tracing". Dabei werden durch entsprechende Netzwerk-Diagnosemittel, die dem Stand der Technik entsprechen, die durchlaufenen Netzelemente, insbesondere Router, registriert, sowie die Anzahl der notwendigen "Hops" der Testnachricht auf ihrem Weg von dem Endgerät E1 zu dem Endgerät E2 ermittelt.

Die Analyse des versendeten Test-Datenpaketes bzw. dessen "Weg" ergibt, dass kein "Hop" zurückgelegt wurde, dass also kein Router verwendet wurde. Damit ist für das Endgerät E1 erwiesen, dass das Endgerät E2 im gleichen (lokalen) Adressraum angeordnet ist, wodurch die "eigene" IP-Adresse des Endgerätes E1, nämlich die 107.246.124.3, nicht nur im Header der an das Endgerät E2 versendeten Datenpakete (hier speziell der SIP-Invite-Message), sondern auch in den "höheren Protokollschichten" der Kommunikation (hier: SIP-Kommunikation) verwendet werden kann. Dabei können auch Fälle eintreten, in denen die Anzahl der "Hops" ungleich Null ist, obwohl sich beide betroffenen Endgeräte E1, E2 in demselben privaten, lokalen Datennetz LAN befinden. In solchen Fällen gibt eine Analyse der durchlaufenen Netzknoten für das Test-Datenpaket Aufschluss darüber, ob die Adresse des gerufenen Endgerätes E2 zu demselben privaten Datennetz LAN gehört. Durch solch eine Analyse kann auch ermittelt werden, ob das Test-Datenpaket aus dem lokalen Datennetz LAN in ein globales Datennetz WWW und von dort aus wieder zurück in dasselbe lokale Datennetz LAN geroutet wurde. Auch in solchen Fällen ist eine "Direkt-Kommunikation" unter ausschließlicher Verwendung der lokal gültigen IP-Adressen möglich und vorteilhaft.

Im Folgenden wird der Fall betrachtet, dass das Endgerät E1 eine Kommunikationsverbindung zu dem "externen" Endgerät E3 aufbaut. Abweichend vom figürlich dargestellten Fall kann das Endgerät auch in einem dritten, lokalen Datennetz "hinter" einer weiteren NAT-Instanz angeordnet sein. Auch hier findet nun der Versand eines Test-Datenpaketes von dem Endgerät E1 zum Endgerät E3 statt, wobei eine Analyse des Verlaufes des Test-Datenpaketes ergibt, dass das Datenpaket nur einen "Hop", nämlich den Router R, durchlaufen hat. Nun versendet das Endgerät E1 ein weiteres Datenpaket, nämlich eine Abfragemeldung zur Ermittlung der eigenen "externen" IP-Adresse zu dem Adressierungs-Server STUN. Auch der Verlauf dieser zweiten Test-Nachricht wird analysiert, wobei ebenfalls als Ergebnis ein "Hop" über den Router R ermittelt wird. Damit ist für das Endgerät E1 erwiesen, dass sich der Adressierungs-Server STUN und das Endgerät E3 in demselben Datennetz WWW befinden.

Diese Analyse kann, genau wie die zuvor stehend beschrieben Analysen, entweder durch das Endgerät E1 selbst, oder durch eine externe Instanz durchgeführt werden. Insbesondere bietet sich der Einsatz eines entsprechend ausgestatteten SNMP-Servers (SNMP = Simple Network Management Protocol) an. Ein solcher Dienst kann nicht nur den Verlauf von Datenpaketen (Test-Nachrichten) analysieren, sondern besitzt oft auch eine detaillierte Information über die Topologie des "eigenen" Netzwerkes, dessen Domänen-Struktur und den "eigenen" Adressraum, so dass eine Analyse der von dem Test-Datenpaket durchlaufenden Netzelemente (z.B. Router) direkt Aufschluss darüber geben kann, ob das erreichte Ziel des Test-Datenpaketes, nämlich das Endgerät E2, ein "externes" Endgerät ist, oder nicht.

Aufgrund der Abfragenachricht übersendet der Adressierungs-Server STUN zu dem Endgerät E1 eine Antwortnachricht, die die "extern sichtbare" IP-Adresse und IP-Portnummer des Endgerätes E1 umfasst; die IP-Adresse ist dabei identisch mit der "externen" IP-Adresse des Routers R, nämlich 246.154.17.3. Aus der Erkenntnis heraus, dass sich das berufene Endgerät E3 außerhalb des eigenen Adressraumes befindet, verwendet das Endgerät E1 nun seine "externen sichtbare" IP-Adresse 246.154.17.3 in den höheren Protokollschichten des SIP-Protokolls, insbesondere als "Absenderadresse", die von dem Endgerät E3 für Antwortnachrichten und für den vom Endgerät E3 zum Endgerät E1 zu richtenden Nutzdatenstrom verwendet werden soll. Die IP-Header der Datenpakete, die von dem Endgerät E1 zum Endgerät E3 versendet werden, tragen jedoch als "Absenderadresse" zunächst die lokal gültige IP-Adresse des Endgerätes E1, nämlich 107.246.124.3. Diese "Absenderadresse" im IP-Header wird erst durch den Router R bzw. die NAT-Instanz des Routers R durch die "externe" IP-Adresse 246.154.17.3 ersetzt.

## Patentansprüche

1. Verfahren zum Aufbau einer paketorientierten Kommunikationsverbindung von einem ersten zu einem zweiten Endgerät (E2, E3) in einem Datennetzwerk (LAN, WWW),
wobei das Datennetzwerk (LAN, WWW) aus einem lokalen Datennetzwerk (LAN, WWW) mit lokalen Adressen eines lokalen Adressraums und einem damit verbundenen öffentlichen Datennetz (WWW) mit globalen Adressen besteht,
wobei das erste Endgerät (E1) im lokalen Datennetzwerk (LAN) angeordnet ist und
wobei dem ersten Endgerät (E1) eine lokale Adresse (107.246.124.3) für Kommunikationsverbindungen innerhalb des lokalen Datennetzwerks (LAN) und eine globale Adresse (246.154.17.3) für Kommunikationsverbindungen mit Endgeräten (E3) des öffentlichen Datennetzwerks (WWW) zugeordnet sind,
**dadurch gekennzeichnet, dass**
- in einem ersten Schritt durch das erste Endgerät (E1) ein Test-Datenpaket zu dem zweiten Endgerät (E2, E3) versendet wird, wobei die Route des Test-Datenpaketes im Datennetzwerk (LAN, WWW) erfasst wird,
- in einem zweiten Schritt anhand der erfassten Route überprüft wird, ob das erste und das zweite Endgerät (E2, E3) in demselben lokalen Adressraum angeordnet sind, und
- in einem dritten Schritt in den Fällen, in denen das Ergebnis der Überprüfung positiv ist, für den Aufbau der Kommunikationsverbindung die lokale Adresse (107.246.124.3) des ersten Endgerätes (E1) als Absenderadresse verwendet wird, und in den anderen Fällen die globale Adresse.

2. Verfahren nach Patentanspruch 1,
**dadurch gekennzeichnet, dass**
in dem oder vor dem dritten Schritt zumindest in den Fällen, in denen das Ergebnis der Überprüfung negativ ist, die dem ersten Endgerät (E1) zugeordnete globale Adresse (246.154.17.3) durch Zugriff auf einen STUN-Server (STUN) ermittelt wird.

3. Verfahren nach einem der vorhergehenden Patentansprüche,
**dadurch gekennzeichnet, dass**
für die Überprüfung die Anzahl der Hops bei der Übertragung des Test-Datenpaketes zu dem zweiten Endgerät (E2, E3) erfasst und ausgewertet wird.

4. Verfahren nach Patentanspruch 3,
sofern rückbezogen auf Patentanspruch 2,
**dadurch gekennzeichnet, dass**
für die Überprüfung die Anzahl der Hops eines weiteren Test-Datenpaketes zu dem STUN-Server (STUN) ermittelt und
mit der Anzahl der Hops des Test-Datenpaketes zu dem zweiten Endgerät (E2, E3) verglichen wird.

5. Verfahren nach Patentanspruch 4,
**dadurch gekennzeichnet, dass**
durch die Überprüfung festgestellt wird, ob sich das zweite Endgerät (E2, E3) und der STUN-Server (STUN) in einem Datennetz (LAN, WWW) mit demselben Adressraum befinden und im positiven Fall im dritten Schritt die globale Adresse (246.154.17.3) verwendet wird.

6. Verfahren nach einem der vorhergehenden Patentansprüche,
**dadurch gekennzeichnet, dass**
als das öffentliche Datennetzwerk (WWW) das Internet verwendet wird.

7. Endgerät (E1) zum Aufbau einer paketorientierten Kommunikationsverbindung in einem Datennetzwerk (LAN, WWW),
**gekennzeichnet durch**
- eine Einrichtung zum Versenden eines Test-Datenpaketes zu einem zweiten Endgerät (E2, E3),
- Mittel zur Erfassung der von dem Test-Datenpaket durchlaufenden Route in dem Datennetzwerk (LAN, WWW),
- Mittel zur Auswertung der erfassten Route, wobei **durch** diese Mittel feststellbar ist, ob das zweite Endgerät (E2, E3) in demselben Adressraum wie das erste Endgerät (E1) angeordnet ist,
- Mittel zur Erfassung einer dem ersten Endgerät (E1) zugeordneten globalen Adresse (246.154.17.3), und
- eine Einrichtung zum Aufbau der Kommunikationsverbindung zu dem zweiten Endgerät (E2, E3), wobei diese Einrichtung derart ausgestaltet ist, dass in den Fällen, in denen das zweite Endgerät (E2, E3) in demselben Adressraum angeordnet ist wie das erste Endgerät, eine lokale Adresse (107.246.124.3) des ersten Endgerätes (E1) als Absenderadresse verwendet wird, und in den anderen Fällen die erfasste globale Adresse (246.154.17.3) des ersten Endgerätes (E1).
